# EUROPÄISCHE PATENTSCHRIFT

(11) **EP 0 464 367 B1**
(45) Veröffentlichungstag und Bekanntmachung des Hinweises auf die Patenterteilung: **21.07.1993**
(21) Anmeldenummer: 91108617.1
(22) Anmeldetag: 28.05.1991
(51) Int. Cl.: E04B 9/12, F16B 7/04

(54) **Bauelementesatz zur Erstellung eines Tragwerks für Reinraumdecken**
Construction units set for the realization of a ceiling bearing structure
Jeu d'éléments de construction pour la réalisation d'une structure portante de plafonds

(30) Priorität: 02.07.1990 DE 4021190
(43) Veröffentlichungstag der Anmeldung: 08.01.1992
(73) Patentinhaber: ZANDER Klimatechnik Aktiengesellschaft, D-90408 Nürnberg (DE)
(72) Erfinder: Ziemer, Wolf, Dipl.-Ing., W-1000 Berlin 33 (DE); Malm, Klaus Hermann, W-8563 Schaittach (DE); Hildebrandt, Andreas, W-3180 Wolfsburg 1 (DE)
(74) Vertreter: Durm, Frank, Dipl.-Ing.

(56) Entgegenhaltungen:
- BE-A- 562 799
- BE-A- 671 527
- FR-A- 1 525 984
- FR-A- 2 279 897
- GB-A- 1 154 081
- US-A- 3 969 031

## Beschreibung

Die Erfindung betrifft einen Bauelementesatz zur Erstellung eines Tragwerks für Reinraumdecken, mit im Raster anzuordnenden Längs- und Querträgern als Tragprofile und Verbindungselementen zur lösbaren Verbindung jeweils zweier Tragprofile, bei dem alle Tragprofile gleichen U-förmigen Querschnitt haben und das Verbindungselement als der Kontur des Innenraums des Tragprofils angepaßter und vollständig in dieses einschiebbarar Verbindungskopf ausgebildet ist.

Produkte, die gegen Verunreinigungen aus der Umgebung, beispielsweise Staub oder Bakterien, empfindlich sind, müssen in besonderen Reinräumen hergestellt werden. Diese bestehen im wesentlichen aus einem begrenzten, gegenüber der Umgebung luftdicht abgeschlossenen Raum sowie einer hochwirksamen Luftfilterung. Größere Reinräume, wie sie die Industrie benötigt, werden als Raum-im-Raum-Systeme ausgeführt. Herzstück des Gesamtsystems ist die Reinraumdecke, welche als Spezialprofil-Tragwerk mit variabler Aufhängekonstruktion ausgeführt ist und insbesondere als Unterkonstruktion für die Filterkassetten, aber auch als Anschlußelement für Trennwände und Träger für Leuchten und andere technische Einrichtungen dient.

Bekannte Tragwerke für Reinraumdecken bestehen aus Längs- und Querträgern, die üblicherweise in einem quadratischen Rastermaß von ungefähr einem Meter Kantenlänge erstellt werden. Die zwischen den Tragprofilen verbleibenden Deckenflächen werden entweder mit Filterkassetten, durch welche vorgereinigte Zuluft in den Reinraum geleitet wird, oder mit luftdichten Abdeckblechen belegt. Die fertige Reinraumdecke muß absolut luft- und partikeldicht sowie ausreichend tragfähig sein, um sowohl alle benötigten technischen Einrichtungen zu tragen als auch - zu Wartungszwecken - begehbar zu sein. Besondere Bedeutung kommt deshalb der Verbindungstechnik der Tragprofile untereinander zu.

Es sind Tragwerke für Reinraumdecken bekannt, bei denen mehrere Meter lange Längsträger im Abstand des gewünschten Rastermaßes mit einer Vielzahl von kurzen Querträgern verbunden werden. Derartige Liniensysteme sind besonders flexibel in Herstellung und Montage. Es sind jedoch auch Systeme bekannt, bei denen gleichlange Tragprofile mittels Verbindungskreuzen zu einem Knotensystem zusammengesetzt werden. Die hierfür benötigten Verbindungskreuze, welche die Enden von vier Tragprofilen aufnehmen müssen, sind meist relativ komplizierte und somit teure Formteile.

Aus der deutschen Offenlegungsschrift DE 36 04 989 A1 ist eine Vorrichtung zum lösbaren Verbinden von zwei Profilstäben bekannt, welche im Querschnitt eckig ausgebildet und so zueinander angeordnet sind, daß die Stirnfläche eines Profilstabes an der Längsseite des anderen Profilstabes anliegt. Die Profilstäbe sind im Querschnitt quadratisch ausgebildet. Auf jeder Außenfläche jedes Profilstabes verläuft eine im Bereich der Mittelachse angeordnete hinterschnittene Längsnut. Im Innern der gleich ausgebildeten Profilstäbe ist jeweils eine in Längsrichtung verlaufende und quadratischen Querschnitt aufweisende Innenkammer vorgesehen. In der Innenkammer des ersten Profilstabes ist ein Arretierteil festgesetzt, das mit einem Nutstein verbunden ist, der wiederum die Längsnut des zweiten Profilstabes hintergreift. Das Arretierteil weist ein Zentrierstück auf, das in seiner Grundfläche der Querschnittskontur und in etwa den Abmessungen der Innenkammer entspricht. Dabei schließt die dem zweiten Profilstab zugewandte Außenfläche des Zentrierstückes mit der entsprechenden Stirnseite des ersten Profilstabes flächenbündig ab. An dieser Außenfläche des Zentrierstückes ist ein Flansch angeordnet, der in Gebrauchstellung in der Längsnut des zweiten Profilstabes so einliegt, daß seine dem Zentrierstück zugewandte Seite flach eben mit der zugeordneten Außenfläche des zweiten Profilstabes verläuft, wobei er sich gleichzeitig mit dieser Außenfläche an der Stirnseite des ersten Profilstabes abstützt. In seinen Endbereichen ist der Flansch mit dem Nutstein verschraubt. Der Nutstein ist in seiner Mitte mit einer Madenschraube versehen, mit deren Hilfe eine Vorarretierung des Nutsteines möglich ist, so daß ein Verrutschen während der Montage verhindert wird.

Die Verbindungsmittel der Vorrichtung gemäß DE OS 36 04 989 sind konstruktiv kompliziert; die Verbindung zweier Profilstäbe ist umständlich und umfaßt mehrere, nacheinander auszuführende Montageschritte.

Aus der FR-A-1 525 984 ist ein Bauelementesatz zur Erstellung eines Rahmengerüstes aus quadratischen, röhrenförmigen Säulenprofilen und rechteckigen, U-förmigen Querträgerprofilen bekannt. Die Säulenprofile und die Querträgerprofile werden durch Eck- und T-Verbindungsstücke, die in die Profile eingefügt und mit Schrauben befestigt werden, verbunden. Bedingt durch die unterschiedliche Ausgestaltung der Säulenprofile und der Querträgerprofile ist eine Vielzahl kompliziert geformter Verbindungsstücke erforderlich. Aus diesem Grunde muß der Bauelementesatz eine Vielzahl verschiedener Bauelemente umfassen.

Aufgabe der vorliegenden Erfindung ist deshalb die Schaffung eines aus möglichst wenigen Elementen bestehenden Bausatzes zur Erstellung eines Tragwerks mit im Hinblick auf die Verwendung bei einer Reinraumdecke einfach gestalteten Verbindungsmitteln.

Bei der Lösung dieses technischen Problems wird ausgegangen von einem Bauelementesatz der zuletzt beschriebenen Art, also mit im Raster anzuordnenden Längs- und Querträgern als Tragprofile und Verbindungselementen zur lösbaren Verbindung je weils zweier Tragprofile, bei dem alle Tragprofile gleichen U-förmigen Querschnitt haben und das Verbindungselement als der Kontur des Innenraums des Tragprofils angepaßter und vollständig in dieses einschiebbarer Verbindungskopf ausgebildet ist. Gelöst wird die Aufgabe dadurch, daß die von den U-Schenkeln gebildeten Längsseiten an ihren Außenseiten jeweils mindestens eine äußere Längsnut und an ihren Innenseiten jeweils eine innere Längsnut von T-förmigem Querschnitt aufweisen, und daß der Verbindungskopf Gewindeschrauben mit Muttern und Hammerköpfen für den Eingriff in die Längsnuten der zu verbindenden Tragprofile trägt.

Zur Herstellung eines Tragwerks für eine Reinraumdecke werden erfindungsgemäß ausgebildete Tragprofile als Längsträger in Längsrichtung in einem bestimmten Abstand parallel zueinander verlegt. Zwischen je zwei dieser Längsträger werden kurze Querträger, die aus dem gleichen Tragprofil gebildet sind, montiert. Durch das Zusammenstoßen von einem oder zwei Querträgern mit einem Längsträger entsteht ein Kreuzungsknoten oder - an den Tragwerkrändern - eine T- bzw. Eckverbindung. Alle erforderlichen Verbindungen der Tragprofile untereinander werden mittels des gleichen Verbindungskopfes und den zugehörigen Gewindeschrauben mit Muttern und Hammerköpfen hergestellt.

Bei der Montage wird in jedes als Querträger dienendes Tragprofil von den eben abgeschnittenen Stirnseiten her je ein Verbindungskopf vollständig in den Innenraum eingeschoben. Mittels der Gewindeschrauben, die erfindungsgemäß mit Hammerköpfen ausgestattet sind, werden zunächst die Verbindungsköpfe verschubsicher im Innenraum der Querträger befestigt. Dabei greifen die Hammerköpfe in die an der Innenseite des Querträgers vorgesehenen inneren Längsnuten ein. Anschließend werden die Verbindungsköpfe mittels weiterer Gewindeschrauben an die Seitenflächen zweier benachbarter Längsträger geschraubt, wobei die Hammerköpfe in die an den Außenseiten angeordneten Längsnuten der als Längsträger dienenden Tragprofile eingreifen. Nach dem Anziehen der Muttern der Gewindeschrauben vom Innenraum des Querträgers her ergibt sich eine feste, jedoch lösbare Verbindung zwischen Längs- und Querträgern.

Der Vorteil des vorgeschlagenen Bauelementesatzes liegt darin, daß er im Kern aus lediglich zwei Spezialteilen, nämlich einem einheitlichen Tragprofil für Längs- und Querträger sowie einem universell verwendbaren Verbindungskopf besteht. Daneben sind nur noch handelsübliche Gewindeschrauben mit Muttern und Hammerköpfen erforderlich. Letztere besitzen rechteckig ausgebildete Köpfe, bei denen zwei diagonal gegenüberliegende Ecken abgerundet sind. Durch diese besondere Ausbildung lassen sich die Hammerköpfe in Querstellung in die Schlitze der T-förmig ausgebildeten Längsnuten einführen.

Beim Anziehen der Muttern verdrehen sich die Hammerköpfe in den Längsnuten so weit, bis sie in den Längsnuten festklemmen. Selbstredend wird man Schrauben und Längsnut derart aufeinander abstimmen, daß die Breite der Längsnuten ungefähr der Länge der Hammerköpfe entspricht, so daß sich die Hammerköpfe in den Nuten maximal um 90° verdrehen können.

Von besonderem Vorteil ist, daß sich die Verbindungsköpfe an jeder beliebigen Stelle innerhalb des Innenraums eines Tragprofils verschubsicher befestigen lassen. Insbesondere wird eine Montageweise ermöglicht, bei der die Verbindungsköpfe so weit eingeschoben werden, daß deren Kopfseiten gegenüber den Stirnseiten der Querträger mindestens um die Dicke der Hammerköpfe vertieft liegt. Trotz bereits vormontierter Gewindeschrauben lassen sich dann nämlich die Querträger zwischen zwei bereits an der Decke hängenden Längsträgern einsetzen, ohne daß dies durch herausstehende Schraubenköpfe behindert werden würde. Sobald der jeweilige Querträger seine endgültige Lage zwischen zwei Längsträgern erreicht hat, können die vormontierten Gewindeschrauben aus dem Verbindungskopf herausgedreht und in die Längsnuten an den Außenseiten der Längsträger geschoben und anschließend mit den Muttern festgezogen werden.

Bevorzugt wird eine Ausführung des Tragprofils, bei dem an den Außenseiten seiner Längsseiten zwei parallele äußere Längsnuten vorgesehen sind. Zweckmäßigerweise sind dann die inneren Längsnuten zwischen den parallelen äußeren Längsnuten angeordnet. Sofern alle Längsnuten den gleichen T-förmigen Querschnitt aufweisen, können für alle Schraubverbindungen des Tragwerks die gleichen Hammerkopf-Gewindeschrauben verwendet werden.

Ein weiterer wesentlicher Vorteil der erfindungsgemäßen Ausbildung des Tragprofils ist, daß es sich im Endlosverfahren aus Aluminium strangpressen läßt. Das einheitliche Tragprofil kann auf einfachste Weise in Längs- und Querträger zersägt werden, wobei lediglich ebene rechtwinklige Sägeschnitte auszuführen sind.

Besonders bevorzugt wird eine Ausführung des Verbindungskopfes in Form einer U-Brücke, wobei die U-Basis als dem Innenraum des Tragprofils angepaßte Kopfplatte und die U-Seiten als Befestigungsschenkel ausgebildet sind. Diese Befestigungsschenkel tragen jeweils eine Gewindeschraube mit Mutter und Hammerkopf zum Eingriff in die gegenüberliegenden inneren Längsnuten des Tragprofils und an der Kopfplatte ist wenigstens eine weitere Gewindeschraube mit Mutter und Hammerkopf zum Eingriff in eine äußere Längsnut eines zweiten Tragprofils vorgesehen. Ein in dieser Weise ausgebildeter Verbindungskopf läßt sich sehr einfach aus Stahl- oder Aluminiumblech biegen. Gleichzeitig gewährleistet er eine besonders sichere Schraubverbindung zwischen zwei aneinanderstoßenden Tragprofilen.

Es wurde bereits oben darauf hingewiesen, daß die Verbindungsköpfe gegenüber der Stirnseite des jeweiligen Tragprofils versenkt montiert werden können, wodurch ein Herausstehen der Hammerkopf-Schrauben verhindert wird. In zusammenmontiertem Zustand führt diese Montageweise jedoch zwangsläufig zu einem gewissen Abstand zwischen der Kopfplatte des Verbindungskopfes und der hierzu parallel verlaufenden Längsseite des anstoßenden Tragprofils. Beim festen Anziehen der in die Kopfplatte eingesetzten Gewindeschrauben, welche als Zuganker wirken, besteht nun die Gefahr, daß die Kopfplatte des Verbindungskopfes verbogen wird. In vorteilhafter Weiterbildung trägt deshalb der Verbindungskopf an der den Befestigungsschenkeln gegenüberliegenden Seite seiner Kopfplatte einen Anschlag, dessen freie Kante im montierten Zustand an der Längsseite des quer verlaufenden Tragprofils anliegt. Dieser Anschlag nimmt somit den von den Gewindeschrauben ausgeübten Zug auf.

Entsprechend der Ausführung des Tragprofils mit jeweils zwei parallelen Längsnuten an den Außenseiten sind vorteilhaft an der Kopfplatte eine erste Gewindeschraube mit Mutter und Hammerkopf zum Eingriff in die eine der äußeren Längsnuten des Tragprofils und eine zweite Gewindeschraube mit Mutter und Hammerkopf zum Eingriff in die parallele zweite Längsnut vorgesehen. Die Ausführung mit zwei parallelen äußeren Längsnuten am Tragprofil und zwei Gewindeschrauben an der Kopfplatte verhindert zuverlässig ein Verdrehen zweier zusammenmontierter Tragprofile gegeneinander um die Achse einer Befestigungsschraube. Grundsätzlich funktioniert die vorgeschlagene Verbindungstechnik jedoch auch mit nur einer einzigen, dann zweckmäßigerweise zentral angeordneten Hammerkopfschraube, welche in eine einzige äußere Längsnut des Tragprofils eingreift. Sofern der Ausführung mit zwei Hammerkopfschrauben an der Kopfplatte des Verbindungskopfes der Vorzug gegeben wird, sollte eine der Schrauben in unmittelbarer Nähe des Anschlags angeordnet sein.

Ohne das Prinzip der hier vorgeschlagenen Verbindungstechnik zu verlassen, kann der Verbindungskopf auch als Kunststoff-Spritzgußteil ausgeführt sein. Er besteht dann aus einem im wesentlichen quaderförmigen, dem Innenraum des Tragprofils angepaßten Klemmkörper sowie einer an den Klemmkörper angeformten Anschlagplatte, deren Abmessungen der Außenkontur des Tragprofils entspricht. Die Verbindung mit den Tragprofilen geschieht wiederum mittels der erwähnten Gewindeschrauben mit Hammerköpfen, für die in dem Kunststoff-Spritzgußteil entsprechende Bohrungen und Vertiefungen vorgesehen sind.

Durch die regelmäßige Anordnung von Tragprofilen als Längs- und Querträger entstehen rechteckige Deckenfelder, in welche anschließend Filterkassetten eingesetzt werden. Die an der Oberseite der Tragprofile vorzusehenden Dichtungen, auf denen die Filterkassetten aufliegen, bestehen vorzugsweise aus einem Silikon-Gel, welches flüssig aufgegossen wird und anschließend zu einer hoch elastischen Masse erstarrt. Zur Bildung eines geschlossenen Fluidbettes enthält der erfindungsgemäße Bauelementesatz deshalb eine Fluid-Formleiste aus Kunststoff, welche in eine äußere Längsnut des Tragprofils mittels eines Klemmprofils einsetzbar ist und dessen Oberseite seitlich überragt. Nach dem Verfestigen des aufgegossenen Dichtmittels wird diese Fluid-Formleiste wieder entfernt.

Die in den Außenseiten des Tragprofils vorgesehenen Längsnuten dienen der Verbindung an Kreuzungspunkten und Stoßstellen. Beim fertigen Tragwerk können diese Längsnuten mit einer flachen Abdeckleiste aus Kunststoff abgedeckt werden. Die Befestigung der Abdeckleiste in einer äußeren Längsnut erfolgt mittels Federklemmen. Hierdurch wird erreicht, daß das Tragprofil allseitig geschlossen ist und somit eine strömungsgünstige Form besitzt. Eine mögliche Ablagerung von Staubpartikeln in den äußeren Längsnuten ist so ebenfalls ausgeschlossen.

Um mehrere Tragprofile zu einem langen Längsträger aneinandersetzen zu können, umfaßt der Bauelementesatz ferner einen Längsverbinder, der U-förmigen, dem Innenraum des Tragprofils angepaßten Querschnitt hat und dessen Längsschenkel mit den inneren Längsnuten zweier zu verbindender Tragprofile korrespondierende Bohrungen zur Aufnahme von Gewindeschrauben aufweisen. Mittels der bekannten Hammerkopfschrauben, die in die inneren Längsnuten eingreifen, wird eine kraftschlüssige und übergangsfreie Verbindung zweier Längsprofile hergestellt.

Entsprechend dient ein besonderer Eckverbinder zur übergangsfreien Eckverbindung zweier rechtwinklig aneinandergesetzter Tragprofile. Dieser Eckverbinder besteht aus zwei, dem Innenraum des Tragprofils angepaßten und rechtwinklig aneinandergesetzten U-Profilstücken, wobei dessen Befestigungsschenkel mit den inneren Längsnuten der zu verbindenden Tragprofile korrespondierende Bohrungen zur Aufnahme von Gewindeschrauben aufweisen. Vor dem Einschieben des Eckverbinders müssen die beiden zu verbindenden Tragprofile auf 45°-Gehrung zugeschnitten werden.

Längsverbinder und Eckverbinder werden mittels Schraubverbindungen verschubsicher in die jeweils zu verbindenden Tragprofile montiert. Aufgrund ihres U-förmigen Querschnitts bleibt dabei der gesamte, vom Innenraum des Tragprofils gebildete Kabelstauraum erhalten.

Der erfindungsgemäße Bauelementesatz wird nachfolgend beispielhaft anhand der beigefügten Zeichnungen näher erläutert.

Es zeigen:
- Fig. 1: zwei zu verbindende Tragprofile mit zugehörigem Verbindungskopf sowie Tragstange und Abdeckschiene, in vereinfachter Explosionsdarstellung;
- Fig. 2: das Tragprofil gemäß Figur 2 mit eingesetztem Verbindungskopf und montierter Abdeckschiene, in einem Schnittbild;
- Fig. 3a: den Verbindungskopf von Figur 1, in einer Vorderansicht;
- Fig. 3b: den Verbindungskopf von Figur 1, in einer Seitenansicht;
- Fig. 4a: die Verbindung von drei Tragprofilen mittels zwei Verbindungsköpfen zu einer Kreuzung, teilweise geschnitten;
- Fig. 4b: die Kreuzung von Figur 4a, in einem Schnittbild entlang der Linie A-A;
- Fig. 5: ein Einstecklager;
- Fig. 6: einen als Kunststoff-Spritzgußteil ausgeführten Verbindungskopf, in perspektivischer Darstellung;
- Fig. 7: die Verbindung von drei Tragprofilen mittels zweier Verbindungsköpfe gemäß Figur 6 zu einer Kreuzung;
- Fig. 8: das Tragprofil von Figur 1, mit Tragstange, Auflagebügel mit Gewindestange, Fluid-Formleiste und Abdeckleiste, in einem Schnittbild;
- Fig. 9a: einen Längsverbinder, in einer Seitenansicht;
- Fig. 9b: den Längsverbinder von Figur 9a, in einer Vorderansicht;
- Fig. 10a: einen Eckverbinder, in einer Draufsicht;
- Fig. 10b: den Eckverbinder von Figur 10a, in einer Vorderansicht.

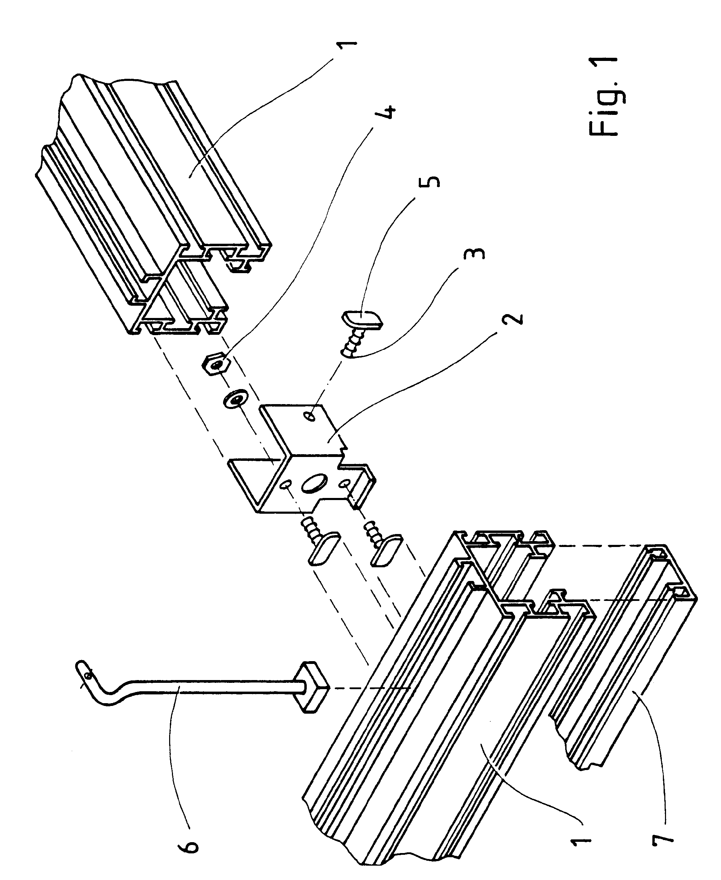

Der Bauelementesatz umfaßt lediglich zwei Grundelemente, welche in Figur 1 dargestellt sind, nämlich ein Tragprofil 1 und einen vollständig in dieses einschiebbaren Verbindungskopf 2.

Ein Tragwerk wird aus einer Vielzahl von im Raster angeordneten Tragprofilen 1 zusammengesetzt. Hierzu wird ein Verbindungskopf 2 zunächst in ein erstes, als Querträger dienendes Tragprofil 1 vollständig eingeschoben und mittels Gewindeschrauben 3 mit Muttern 4 und Hammerköpfen 5 verschubsicher verschraubt. Sodann wird dieses erste Tragprofil 1 mit eingesetztem Verbindungskopf rechtwinklig an die Außenseite eines zweiten, als Längsträger dienendes Tragprofil 1 mittels weiterer Gewindeschrauben 3 mit Muttern 4 und Hammerköpfen 5 angeschraubt. Das fertige Tragwerk einer Reinraumdecke wird mittels Tragstangen 6 an die bauseitig vorgegebene Decke, beispielsweise einer Industriehalle, gehängt. Zuletzt werden die Unterseiten der Tragprofile 1 mit aufklemmbaren Abdeckschienen 7 geschlossen.

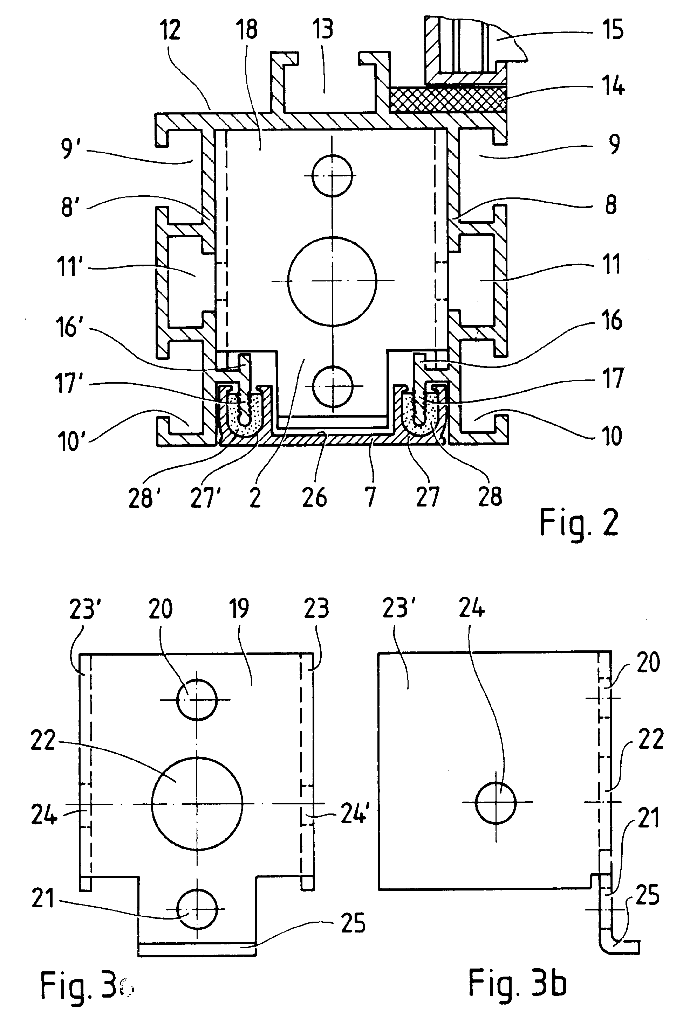

Figur 2 läßt den U-förmigen Querschnitt des Tragprofils 1 erkennen. Die von den U-Schenkeln gebildeten Längsseiten 8 und 8' weisen an ihren Außenseiten jeweils eine obere äußere Längsnut 9 bzw. 9' und eine untere äußere Längsnut 10 bzw. 10' auf. Entlang den Innenseiten der Längsseiten 8 und 8' verläuft jeweils eine innere Längsnut 11 bzw. 11'. Die inneren Längsnuten 11 und 11' sind zwischen den parallel verlaufenden, oberen und unteren Längsnuten 9, 9' bzw. 10,10' der Außenseite angeordnet. An der Oberseite 12 des Tragprofils 1 ist eine entlang der Mittellinie verlaufende Kopfnut 13 vorgesehen. Alle Nuten haben den gleichen T-förmigen Querschnitt und sind so bemessen, daß sie die Hammerköpfe 5 der Gewindeschrauben 3 (vgl. Figur 1) aufnehmen können.

Parallel zur Kopfnut 13 verläuft auf der Oberseite 12 des Tragprofils 1 eine Dichtungsleiste 14, welche der luftdichten Auflage einer Filterkassette 15 dient. Nahe den freien Kanten der Längsseiten 8 und 8' sind beiderseits Auflagerinnen 16 bzw. 16' ausgebildet. An den Außenseiten tragen die Auflagerinnen 16 und 16' Zahnleisten 17 bzw. 17'. Nach unten hin ist das Tragprofil 1 offen, so daß sein Innenraum 18 frei zugänglich ist und als Kabelstauraum genutzt werden kann.

Von der Stirnseite her ist in den Innenraum 18 des Tragprofils 1 ein Verbindungskopf 2 aus Stahlblech eingeschoben. Wie am besten aus den Figuren 3a und 3b ersichtlich, hat der Verbindungskopf 2 die Form einer U-Brücke, wobei die U-Basis als dem Innenraum 18 des Tragprofils 1 angepaßte Kopfplatte 19 ausgebildet ist. In der Kopfplatte 19 ist eine obere Bohrung 20 und eine untere Bohrung 21 zur Aufnahme von Gewindeschrauben 3 (vgl. Figur 1) vorgesehen. Eine zentrale Ausnehmung 22 dient als Durchführung für Elektrokabel. Die U-Seiten des Verbindungskopfes 2 sind als Befestigungsschenkel 23 und 23' ausgebildet; sie weisen jeweils Bohrungen 24 bzw. 24' zur Aufnahme der gleichen Gewindeschrauben 3 auf. An der den Befestigungsschenkeln 23 und 23' gegenüberliegenden Seite trägt die Kopfplatte 19 einen rechtwinklig nach vorne abgebogenen Anschlag 25.

In eingeschobenem Zustand liegen die Befestigungsschenkel 23, 23' des Verbindungskopfes 2 an den Innenseiten der Längsseiten 8,8' des Tragprofils 1 an und mit ihren Unterkanten auf den Auflagerinnen 16,16' auf. Die Bohrungen 24 und 24' in den Befestigungsschenkeln 23,23' liegen den inneren Längsnuten 11,11' genau gegenüber, während die obere Bohrung 20 und die untere Bohrung 21 in der Kopfplatte 19 mit den oberen äußeren Längsnuten 9,9' bzw. den unteren äußeren Längsnuten 10,10' des Tragprofils 1 korrespondieren.

Auf die Zahnleisten 17 und 17' des Tragprofils 1 ist die Abdeckschiene 7 aufgeschoben. Hierzu weist die Abdeckschiene 7 an ihrer Innenseite 26 zwei parallel zu ihren Längsrändern verlaufende Klemmrinnen 27 und 27' auf, in welche Klemmgummi-Stücke 28 und 28' eingelegt sind. Die Breite der Abdeckschiene 7 entspricht dem lichten Abstand zwischen den Längsseiten 8 und 8' des Tragprofils 1.

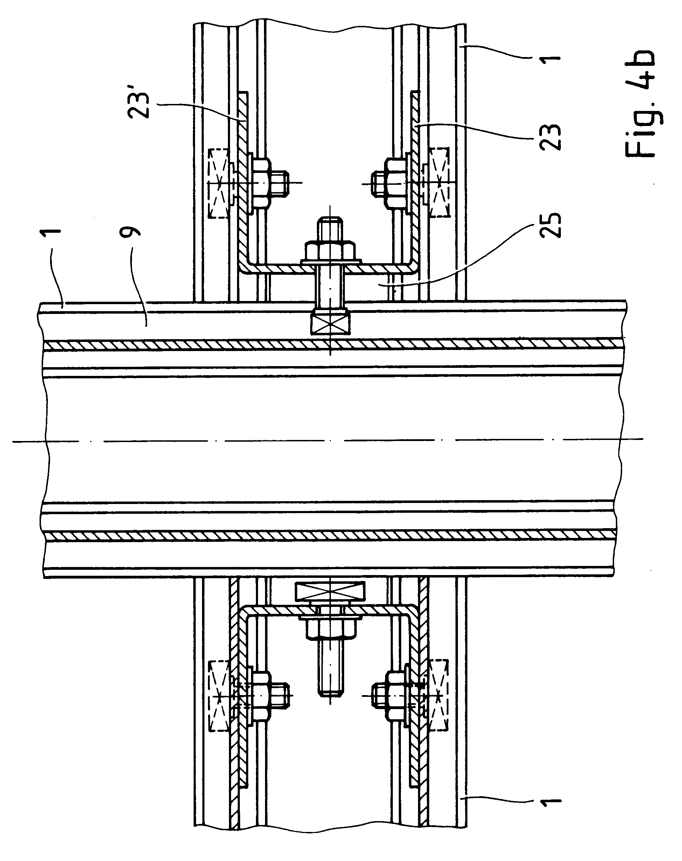

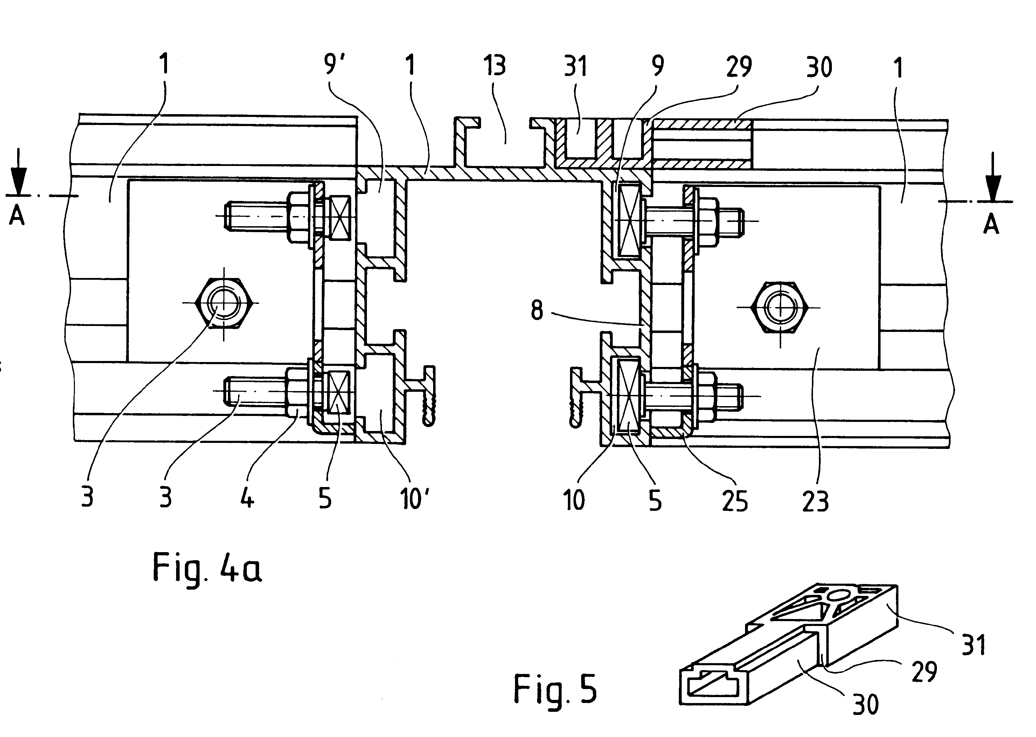

Die Figuren 4a und 4b verdeutlichen nun den Zusammenbau mehrerer Tragprofile 1 zu einem Tragwerk. In Figur 4a dient das mittlere Tragprofil 1 als durchgehender Längsträger, an dem seitlich zwei weitere Tragprofile 1 als Querträger angeschraubt sind. Hierzu sind in die beiden seitlichen Tragprofile 1 jeweils ein Verbindungskopf 2 eingeschoben und mittels Gewindeschrauben 3 befestigt.

Die linke Hälfte der Figur 4a zeigt das quer verlaufende Tragprofil 1 unmittelbar vor dem Verschrauben, wobei die Hammerköpfe 5 noch ihre versenkte Stellung einnehmen. In der hier dargestellten Querstellung können die rechteckigen Hammer köpfe 5 in die äußeren Längsnuten 9' bzw. 10' eingeführt werden.

In der rechten Hälfte der Figur 4a sind die Gewindeschrauben durch Verdrehen der Muttern 4 so weit aus der Kopfplatte 19 des Verbindungskopfes 2 herausgeschraubt, daß sie über das Ende des seitlich angesetzten Tragprofils 1 in die äußeren Längsnuten 9 bzw. 10 des mittleren Tragprofils 1 hineinragen. Nach Verdrehung der Hammerköpfe 5 um ungefähr 90° klemmen sich diese in den Längsnuten 9, 10 fest und sind so gegen weiteres Verdrehen gesichert. Durch Anziehen der Muttern 4 wird das seitliche Tragprofil 1 mit seiner Stirnseite auf die Längsseite 8 des als Längsträger dienenden Tragprofils 1 angezogen. Der Anschlag 25 verhindert ein Verbiegen der Kopfplatte 19 des Verbindungskopfes 2 unter der Zugwirkung der Verschraubung.

Zwischen der Kopfnut 13 des als Längsträger dienenden Tragprofils 1 und den stirnseitigen Enden der Kopfnuten der seitlich angesetzten Tragprofile 1 verbleibt ein Zwischenraum, welcher durch ein Einstecklager 29 geschlossen werden kann. Das in Figur 5 gesondert dargestellte Einstecklager 29 ist aus Kunststoff und weist ein der Innenkontur der Kopfnut 13 des Tragprofils 1 angepaßtes Einsteckende 30 sowie ein angeformtes quaderförmiges Auflageteil 31 auf. Die Höhe des Auflageteils 31 entspricht der Außenabmessung der Kopfnut 13, so daß sich ein absatzloser Übergang zwischen Längs- und Querträgern ergibt.

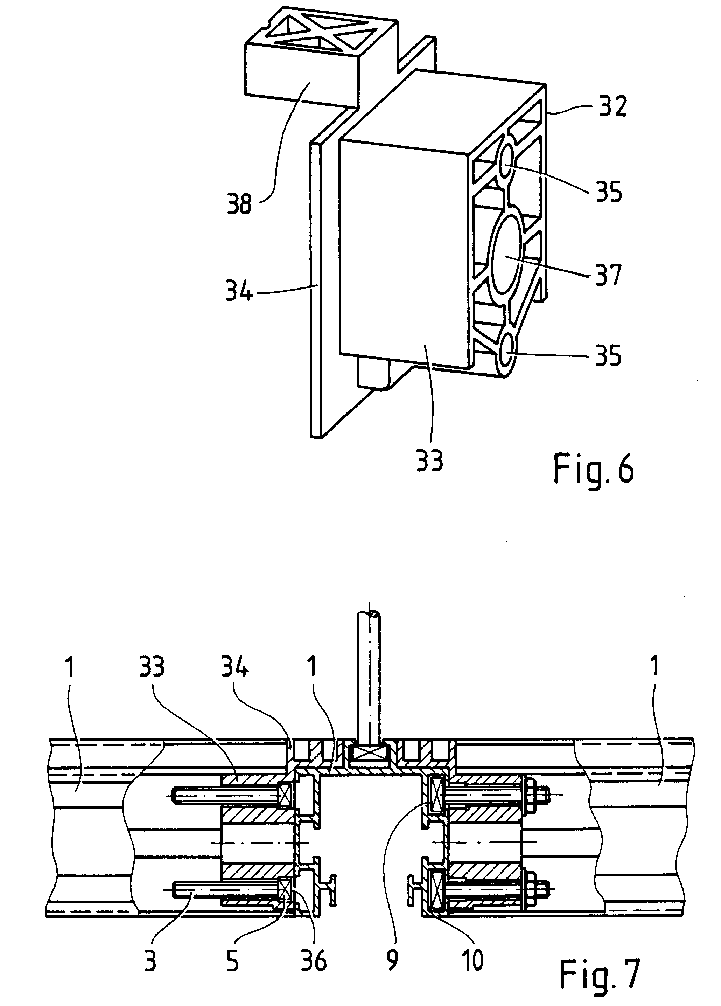

Anstelle des Verbindungskopfes 2 aus Stahlblech kann auch ein als Kunststoff-Spritzgußteil ausgebildeter Verbindungskopf 32 verwendet werden. Dieser alternative, in Figur 6 dargestellte Verbindungskopf 32 weist einen im wesentlichen quaderförmigen, dem Innenraum 18 des Tragprofils 1 angepaßten Klemmkörper 33 sowie eine an diesen angeformte Anschlagplatte 34 auf. Die Abmessungen der Anschlagplatte 34 entsprechen der Außenkontur des Tragprofils 1. Bohrungen 35 dienen der Verschraubung mittels Gewindeschrauben 3. Stirnseitig sind Vertiefungen 36 zur Aufnahme der Hammerköpfe 5 der Gewindeschrauben 3 vorgesehen, so daß diese bei der Montage in den Verbindungskopf 32 versenkt werden können. Zur Durchführung von Elektrokabeln ist eine zentrale Durchführung 37 vorgesehen. An seiner Oberseite trägt der Verbindungskopf 32 ein angeformtes Auflager 38.

Figur 7 verdeutlicht die Verbindung dreier Tragprofile 1 mittels des Verbindungskopfes 32 aus Kunststoff. Auf der linken Seite sind die Hammerköpfe 5 in die Vertiefungen 36 des Verbindungskopfes 32 versenkt, während sie auf der rechten Seite mit den äußeren Längsnuten 9 und 10 des als Längsträger dienenden Tragprofils 1 in Eingriff sind.

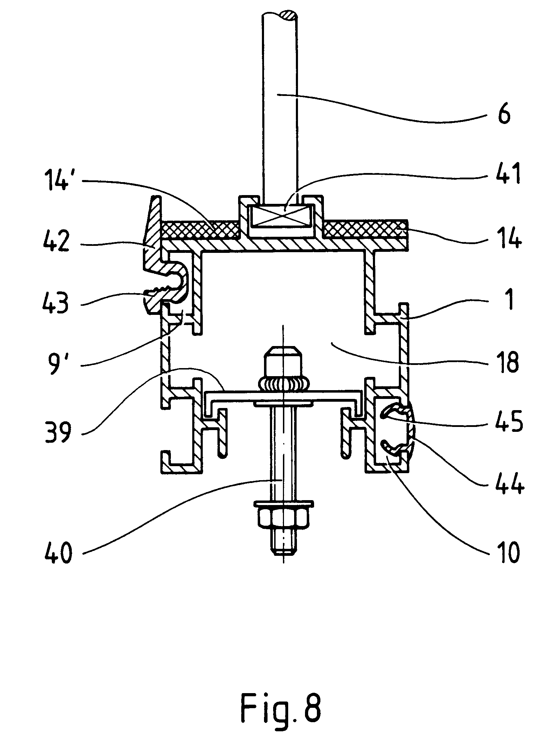

In Figur 8 sind einige weitere zusätzliche Bauelemente des Bausatzes zur Erstellung eines Tragwerks für Reinraumdecken dargestellt.

Ein spezieller Auflagebügel 39 läßt sich von unten in den Innenraum 18 des Tragprofils 1 einführen und auf dessen Auflagerinnen 16 und 16' auflagern. Der Auflagebügel 39 trägt eine Gewindestange 40, an welche beispielsweise eine Reinraumleuchte montiert werden kann.

In die Kopfnut 13 des Tragprofils 1 läßt sich die Tragstange 6 (vgl. auch Figur 1) mittels eines Befestigungsschuhs 41 einschieben. Sie dient der sicheren Aufhängung der Reinraumdecke am Bauwerk.

Eine Fluid-Formleiste 42 aus Kunststoff dient der Bildung eines Fluid-Bettes auf der Oberseite des Tragprofils 1, in welches ein flüssiges Silikon-Gel eingegossen werden kann. Auf diese Weise lassen sich die elastischen Dichtungsleisten 14,14' auf der Oberseite 12 ausbilden. Die Fluid-Formleiste 42 weist ein Klemmprofil 43 auf, mit dem sie in die obere Längsnut 9' eingesetzt ist. Nach dem Erstarren des Silikon-Gels zur Dichtungsleiste 14 wird die Fluid-Formleiste 42 wieder entfernt.

In die äußeren Längsnuten 9,9' bzw. 10,10' lassen sich flache Abdeckleisten 44 aus Kunststoff einsetzen, welche elastische Federklemmen 45 tragen.

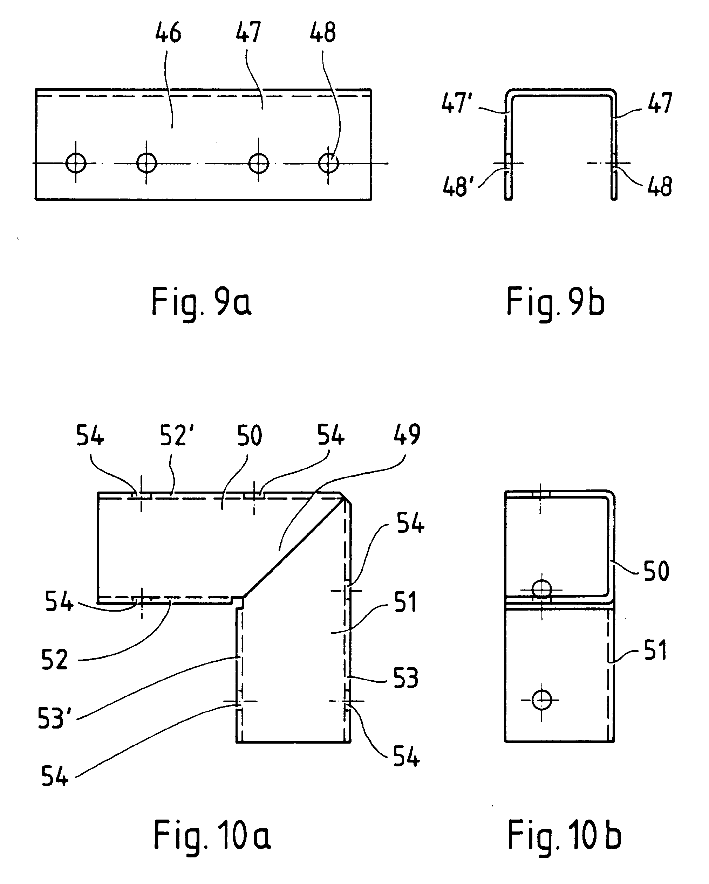

Mehrere Tragprofile 1 lassen sich linear zu einem langen Längsträger mittels des in den Figuren 9a und 9b dargestellten Längsverbinders 46 zusammensetzen. Dieser Längsverbinder 46 hat U-förmigen, dem Innenraum 18 des Tragprofils 1 angepaßten Querschnitt. Seine Längsschenkel 47 und 47' weisen Bohrungen 48 und 48' zur Aufnahme von Gewindeschrauben 3 auf. Der Längsverbinder 46 läßt sich jeweils zur Hälfte in die zu verbindenden Tragprofile 1 einschieben. Die Bohrungen 48 und 48' sind so angeordnet, daß sie mit den Längsnuten 11 bzw. 11' des Tragprofils 1 korrespondieren. Die Befestigung erfolgt mittels Gewindeschrauben 3, deren Hammerköpfe 5 in die inneren Längsnuten 11,11' eingreifen.

In ähnlicher Weise kann eine Eckverbindung zwischen zwei Tragprofilen 1 mittels des in den Figuren 10a und 10b dargestellten Eckverbinders 49 hergestellt werden. Dieser Eckverbinder 49 besteht aus zwei, dem Innenraum 18 des Tragprofils 1 angepaßten und rechtwinklig aneinandergesetzten U-Profilstücken 50 und 51. Deren Befestigungsschenkel 52 und 52' bzw. 53 und 53' weisen Bohrungen 54 auf, welche mit den inneren Längsnuten 11 bzw. 11' zweier zu verbindender Tragprofile 1 korrespondieren und zur Aufnahme von Gewindeschrauben 3 vorgesehen sind. Zur Herstellung einer Eckverbindung werden die beiden U-Profilstücke 50 und 51 des Längsverbinders 46 in die Enden zweier auf 45°-Gehrung gesägter Tragprofile 1 eingeschoben.

### Verzeichnis der Bezugsziffern

- 1: Tragprofile
- 2: Verbindungskopf (U-Brücke)
- 3: Gewindeschraube
- 4: Mutter (von 3)
- 5: Hammerkopf (von 3)
- 6: Tragstange
- 7: Abdeckschiene

- 8,8': Längsseiten (von 1)
- 9,9': (obere) äußere Längsnuten (an 8,8')
- 10,10': (untere) äußere Längsnuten (an 8,8')
- 11,11': innere Längsnuten (an 8,8')
- 12: Oberseite (von 1)
- 13: Kopfnut (auf 12)
- 14,14': Dichtungsleisten
- 15: Filterkassette
- 16,16': Auflagerinnen
- 17,17': Zahnleisten
- 18: Innenraum (von 1)

- 19: Kopfplatte (von 2)
- 20: obere Bohrung (in 19)
- 21: untere Bohrung (in 19)
- 22: Ausnehmung (in 19)
- 23,23': Befestigungsschenkel (von 2)
- 24,24': Bohrung (in 23,23')
- 25: Anschlag (an 19)
- 26: Innenseite (von 7)
- 27,27': Klemmrinnen (von 7)
- 28,28': Klemmgummi-Stücke

- 29: Einstecklager
- 30: Einsteckende (von 29)
- 31: Auflageteil (von 29)

- 32: Verbindungskopf (Kunststoff-Spritzgußteil)
- 33: Klemmkörper (von 32)
- 34: Anschlagplatte (von 32)
- 35: Bohrungen (durch 32)
- 36: Vertiefungen (in 32)
- 37: Durchführung (durch 32)
- 38: Auflager (an 32)

- 39: Auflagebügel
- 40: Gewindestange (an 39)
- 41: Befestigungsschuh (von 6)
- 42: Fluid-Formleiste
- 43: Klemmprofil (von 42)
- 44: Abdeckleiste
- 45: Federklemmen (an 44)

- 46: Längsverbinder
- 47,47': Längsschenkel (von 46)
- 48,48': Bohrungen (in 47,47')
- 49: Eckverbinder
- 50: (erstes) U-Profilstück (von 49)
- 51: (zweites) U-Profilstück (von 49)
- 52,52': Befestigungsschenkel (von 50)
- 53,53': Befestigungsschenkel (von 51)
- 54: Bohrungen (in 49)

## Patentansprüche

1. Bauelementesatz zur Erstellung eines Tragwerks für Reinraumdecken, mit im Raster anzuordnenden Längs- und Querträgern als Tragprofile und Verbindungselementen zur lösbaren Verbindung jeweils zweier Tragprofile, bei dem alle Tragprofile (1) gleichen U-förmigen Querschnitt haben und das Verbindungselement als der Kontur des Innenraums (18) des Tragprofils (1) angepaßter und vollständig in dieses einschiebbarer Verbindungskopf (2, 32) ausgebildet ist, dadurch **gekennzeichnet,** daß die von den U-Schenkeln gebildeten Längsseiten (8, 8') an ihren Außenseiten jeweils mindestens eine äußere Längsnut (9, 9'; 10, 10') und an ihren Innenseiten jeweils eine innere Längsnut (11, 11') von T-förmigem Querschnitt aufweisen, und daß der Verbindungskopf (2, 32) Gewindeschrauben (3) mit Muttern (4) und Hammerköpfen (5) für den Eingriff in die Längsnuten (9, 9'; 10, 10') der zu verbindenden Tragprofile (1) trägt.

2. Bauelementesatz nach Anspruch 1, dadurch **gekennzeichnet,** daß das Tragprofil (1) an den Außenseiten seiner Längsseiten (8,8') zwei parallele äußere Längsnuten (9,9'; 10,10') aufweist.

3. Bauelementesatz nach Anspruch 2, dadurch **gekennzeichnet,** daß die inneren Längsnuten (11,11') zwischen den oberen äußeren Längsnuten (9,9') und den unteren äußeren Längsnuten (10,10') angeordnet sind.

4. Bauelementesatz nach einem der Ansprüche 1 bis 3, dadurch **gekennzeichnet,** daß alle Längsnuten (9,9'; 10,10'; 11,11') den gleichen T-förmigen Querschnitt aufweisen.

5. Bauelementesatz nach einem der Ansprüche 1 bis 4, dadurch **gekennzeichnet,** daß das Tragprofil (1) aus Aluminium stranggepreßt ist.

6. Bauelementesatz nach einem der Ansprüche 1 bis 5, dadurch **gekennzeichnet,** daß der Verbindungskopf (2) die Form einer U-Brücke hat, wobei die U-Basis als dem Innenraum (18) des Tragprofils (1) angepaßte Kopfplatte (19) und die U-Seiten als Befestigungsschenkel (23, 23') ausgebildet sind, daß die Befestigungsschenkel (23,23') jeweils eine Gewindeschraube (3) mit Mutter (4) und Hammerkopf (5) zum Eingriff in die gegenüberliegenden inneren Längsnuten (11,11') des Tragprofils (1) tragen und daß an der Kopfplatte (19) wenigstens eine weitere Gewindeschraube (3) mit Mutter (4) und Hammerkopf (5) zum Eingriff in eine äußere Längs- nut (9, 9'; 10,10') eines zweiten Tragprofils (1) vorgesehen ist.

7. Bauelementesatz nach Anspruch 6, dadurch **gekennzeichnet,** daß der Verbindungskopf (2) an der den Befestigungsschenkeln (23,23') gegenüberliegenden Seite seiner Kopfplatte (19) einen Anschlag (25) trägt.

8. Bauelementesatz nach Anspruch 6 oder 7, dadurch **gekennzeichnet,** daß der Verbindungskopf (2) an seiner Kopfplatte (19) eine erste Gewindeschraube (3) mit Mutter (4) und Hammerkopf (5) zum Eingriff in eine obere äußere Längsnut (9,9') des Tragprofils (1) und eine zweite Gewindeschraube (3) mit Mutter (4) und Hammerkopf (5) zum Eingriff in eine untere äußere Längsnut (10, 10') aufweist.

9. Bauelementesatz nach den Ansprüchen 7 oder 8, dadurch **gekennzeichnet,** daß eine Gewindeschraube (3) in unmittelbarer Nähe des Anschlags (25) angeordnet ist.

10. Bauelementesatz nach einem der Ansprüche 1 bis 9, dadurch **gekennzeichnet,** daß der Verbindungskopf (2) aus Stahl- oder Aluminiumblech gefertigt ist.

11. Bauelementesatz nach einem der Ansprüche 1 bis 5, dadurch **gekennzeichnet,** daß der Verbindungskopf (32) als Kunststoff-Spritzgußteil ausgeführt ist, einen im wesentlichen quaderförmigen, dem Innenraum (18) des Tragprofils (1) angepaßten Klemmkörper (33) aufweist, eine an den Klemmkörper (33) angeformte Anschlagplatte (34) trägt, deren Abmessungen der Außenkontur des Tragprofils (1) entspricht, und Bohrungen (35) für die Gewindeschrauben (3) und Vertiefungen (36) zur Aufnahme der Hammerköpfe (5) aufweist.

12. Bauelementesatz nach einem der Ansprüche 1 bis 11, **gekennzeichnet** durch eine im wesentlichen eben ausgebildete Abdeckschiene (7), deren Breite dem lichten Abstand zwischen den Längsseiten (8,8') des Tragprofils (1) entspricht.

13. Bauelementesatz nach einem der Ansprüche 1 bis 12, **gekennzeichnet** durch eine Fluid-Formleiste (42) aus Kunststoff, welche in eine äußere Längsnut (9,9') des Tragprofils (1) mittels eines Klemmprofils (43) einsetzbar ist und die Oberseite (12) des Tragprofils (1) seitlich überragt.

14. Bauelementesatz nach einem der Ansprüche 1 bis 13, **gekennzeichnet** durch eine flache Abdeckleiste (44) aus Kunststoff, welche in eine äußere Längsnut (9,9'; 10,10') des Tragprofils (1) mittels Federklemmen (45) einsetzbar ist.

15. Bauelementesatz nach einem der Ansprüche 1 bis 14, **gekennzeichnet** durch einen Längsverbinder (46), der U-förmigen, dem Innenraum (18) des Tragprofils (1) angepaßten Querschnitt hat, und dessen Längsschenkel (47,47') mit den inneren Längsnuten (11,11') zweier zu verbindender Tragprofile (1) korrespondierende Bohrungen (48,48') zur Aufnahme von Gewindeschrauben (3) aufweisen.

16. Bauelementesatz nach einem der Ansprüche 1 bis 15, **gekennzeichnet** durch einen Eckverbinder (49), der aus zwei dem Innenraum (18) des Tragprofils (1) angepaßten und rechtwinklig aneinandergesetzten U-Profilstücken (50,51) zusammengesetzt ist, und dessen Befestigungsschenkel (52,52'; 53,53') mit den inneren Längsnuten (11,11') des Tragprofils (1) korrespondierende Bohrungen (54) zur Aufnahme von Gewindeschrauben (3) aufweisen.

## Claims

1. A set of constructional units for producing a bearing structure for ceilings of clean rooms with longitudinal and transverse beams as carrier sections to be arranged in a modular grid and connection elements for the releasable connection of respectively two carrier sections, wherein all carrier sections (1) have the same U-shaped cross-section and the connecting element is formed as a connecting head (2, 32) matching the contour of the interior (18) of the carrier section (1) and fully insertable into the latter, characterised in that on their outer sides the longitudinal sides (8, 8') formed by U-shaped limbs have respectively at least one external longitudinal groove (9, 9'; 10, 10') and on their internal sides have a respective internal longitudinal groove (11, 11') of T-shaped cross-section, and in that the connecting head (2, 32) carries threaded bolts (3) with nuts (4) and hammer heads (5) for the engagement into the longitudinal grooves (9, 9'; 10, 10') of the carrier sections (1) to be connected thereto.

2. A set of constructional units according to claim 1, characterised in that the carrier section (1) has two parallel external longitudinal grooves (9, 9'; 10, 10') on the outer sides of its longitudinal sides (8, 8').

3. A set of constructional units according to claim 2, characterised in that the internal longitudinal grooves (11, 11') are arranged between the upper external longitudinal grooves (9, 9') and the lower external longitudinal grooves (10, 10').

4. A set of constructional units according to any one of claims 1 to 3, characterised in that all the longitudinal grooves (9, 9'; 10, 10'; 11, 11') have the same T-shaped cross-section.

5. A set of constructional units according to any one of claims 1 to 4, characterised in that the carrier section (1) is extruded from aluminium.

6. A set of constructional units according to any one of claims 1 to 5, characterised in that the connecting head (2) has the shape of a U-shaped bridge, wherein the base of the U is formed as a head plate (19) matched to the interior (18) of the carrier section (1) and the sides of the U are formed as securing shanks (23, 23'), in that the securing shanks (23, 23') respectively carry a threaded bolt (3) with nut (4) and hammer head (5) for engaging into the oppositely lying internal longitudinal grooves (11, 11') of the carrier section (1), and in that at least one further threaded bolt (3) with nut (4) and hammer head (5) are provided at the headed plate (19) for engagement into an outer longitudinal groove (9, 9'; 10, 10') of a second carrier section (1).

7. A set of constructional units according to claim 6, characterised in that the connecting head (2) carries an abutment (25) at the side of its head plate (19) which lies opposite to the securing shanks (23, 23').

8. A set of constructional units according to claim 6 or 7, characterised in that at its head plate (19) the connecting head (2) has the first threaded bolt (3) with nut (4) and hammer head (5) for engagement into an upper external longitudinal groove (9, 9') of the carrier section (1) and a second threaded bolt (3) with nut (4) and hammer head (5) for engagement into a lower external longitudinal groove (10, 10').

9. A set of constructional units according to claim 7 or 8, characterised in that a threaded bolt (3) is arranged in the direct vicinity of the abutment (25).

10. A set of constructional units according to any one of claims 1 to 9, characterised in that the connecting head (2) is made from sheet steel or sheet aluminium.

11. A set of constructional units according to any one of claims 1 to 5, characterised in that the connecting head (32) is made from an injection-moulded plastics part, has an essentially rectangular clamping body (33) matching the interior ( 18) of the carrier section (1), carries an abutment plate (34) moulded to the clamping body (33), the dimensions of the abutment plate corresponding to the external contour of the carrier section (1), and has bores (35) for the threaded bolts (3) and recesses (36) for receiving the hammer heads (5).

12. A set of constructional units according to any one of claims 1 to 11, characterised by an essentially planarly constructed covering rail (7), the width of which corresponds to the internal space between the longitudinal sides (8, 8') of the carrier section (1).

13. A set of constructional units according to any one of claims 1 to 12, characterised by a plastics fluid-moulded bar (42) which is insertable into an external longitudinal groove (9, 9') of the carrier section (1) by way of a clamping section (43) and laterally overlaps the upper side (12) of the carrier section (1).

14. A set of constructional units according to one of claims 1 to 13, characterised by a flat covering bar (44) made of plastics which is insertable by way of spring clamps (45) into an external longitudinal groove (9, 9'; 10, 10') of the carrier section (1).

15. A set of constructional units according to any one of claims 1 to 14, characterised by a longitudinal connector (46), which has a U-shaped cross-section matching the interior (18) of the carrier section (1), and the longitudinal shanks (47, 47') of which have two bores (48, 48') corresponding with the internal longitudinal grooves (11, 11') of two carrier sections (1) to be connected in order to receive the threaded bolts (3).

16. A set of constructional elements according to any one of claims 1 to 15, characterised by a corner connector (49) which is composed of two U-shaped profiled members (50, 51) extending perpendicularly to each other and matching the interior (18) of a carrier section (1), the securing shanks (52, 52'; 53, 53') of the U-shaped profile members having bores (54) corresponding with the internal longitudinal grooves (11, 11') of the carrier section (1) in order to receive threaded bolts (3).

## Revendications

1. Jeu d'éléments de construction pour la réalisation d'une structure portante de plafonds de salles blanches, avec des poutres longitudinales et transversales, comme profilés porteurs, à disposer dans une trame, et avec des éléments de jonction pour l'assemblage amovible de deux profilés porteurs, jeu sur lequel tous les profilés porteurs (1) ont la même section transversale en U, et sur lequel l'élément de jonction est réalisé sous forme de tête d'assemblage (2, 32), adaptée au contour de l'espace interne (18) du profilé porteur (1), dans lequel elle peut être totalement insérée, caractérisé en ce que les côtés longitudinaux (8, 8'), formés par les branches en U, présentent respectivement une rainure longitudinale externe au moins (9, 9'; 10, 10') sur leurs faces externes, et une rainure longitudinale interne (11, 11') sur leurs faces internes, de section transversale en T, et en ce que la tête d'assemblage (2, 32) supporte des boulons (3) avec des écrous (4) et des têtes de marteau (5) pour l'ancrage dans les rainures longitudinales (9, 9'; 10, 10') des profilés porteurs (1) à assembler.

2. Jeu d'éléments de construction suivant la revendication 1, caractérisé en ce que le profilé porteur (1) présente deux rainures longitudinales externes parallèles (9, 9'; 10, 10') sur les faces externes de ses côtés longitudinaux (8, 8').

3. Jeu d'éléments de construction suivant la revendication 2, caractérisé en ce que les rainures longitudinales internes (11, 11') sont disposées entre les rainures longitudinales externes supérieures (9, 9') et les rainures longitudinales externes inférieures (10, 10').

4. Jeu d'éléments de construction suivant l'une quelconque des revendications 1 à 3, caractérisé en ce que toutes les rainures longitudinales (9, 9'; 10, 10'; 11, 11') présentent la même section transversale en T.

5. Jeu d'éléments de construction suivant l'une quelconque des revendications 1 à 4, caractérisé en ce que le profilé porteur (1) est filé à la presse en aluminium.

6. Jeu d'éléments de construction suivant l'une quelconque des revendications 1 à 5, caractérisé en ce que la tête d'assemblage (2) a la forme d'un pont en U, la base du U étant réalisée sous forme de tôle de recouvrement (19), adaptée à l'espace interne (18) du profilé porteur (1), les côtés du U étant réalisés sous forme de branches de fixation (23, 23'), en ce que les branches de fixation (23, 23') supportent respectivement un boulon (3) avec un écrou (4) et une tête de marteau (5), pour l'ancrage dans les rainures longitudinales internes opposées (11, 11') du profilé porteur (1), et en ce qu'un autre boulon (3) au moins, avec un écrou (4) et une tête de marteau (5), est prévu sur la tôle de recouvrement (19) pour l'ancrage dans une rainure longitudinale externe (9, 9'; 10, 10') d'un second profilé porteur (1).

7. Jeu d'éléments de construction suivant la revendication 6, caractérisé en ce que la tête d'assemblage (2) supporte une butée (25) sur la face de sa tôle de recouvrement (19), opposée aux branches de fixation (23, 23').

8. Jeu d'éléments de construction suivant l'une des revendications 6 et 7, caractérisé en ce que la tête d'assemblage (2) présente, sur sa tôle de recouvrement (19), un premier boulon (3) avec un écrou (4) et une tête de marteau (5), pour l'ancrage dans une rainure longitudinale externe supérieure (9, 9') du profilé porteur (1), et un second boulon (3) avec un écrou (4) et une tête de marteau (5), pour l'ancrage dans une rainure longitudinale externe inférieure (10, 10').

9. Jeu d'éléments de construction suivant l'une des revendications 7 et 8, caractérisé en ce qu'un boulon (3) est disposé au voisinage immédiat de la butée (25).

10. Jeu d'éléments de construction suivant l'une quelconque des revendications 1 à 9, caractérisé en ce que la tête d'assemblage (2) se compose de tôle d'acier ou d'aluminium.

11. Jeu d'éléments de construction suivant l'une quelconque des revendications 1 à 5, caractérisé en ce que la tête d'assemblage (32) est réalisée sous forme de pièce de matière plastique moulée par injection, présente un corps de serrage (33) essentiellement parallélépipédique, adapté à l'espace interne (18) du profilé porteur (1), supporte une plaque de butée (34), formée sur le corps de serrage (33) et dont les dimensions correspondent au contour externe du profilé porteur (1), et présente des trous (35) pour les boulons (3) et des évidements (36) pour recevoir les têtes de marteau (5).

12. Jeu d'éléments de construction suivant l'une quelconque des revendications 1 à 11, caractérisé par un rail de couverture (7) essentiellement plan, dont la largeur correspond à l'écartement des côtés longitudinaux (8, 8') du profilé porteur (1).

13. Jeu d'éléments de construction suivant l'une quelconque des revendications 1 à 12, caractérisé par une baguette de mise en forme pour fluide (42) en matière plastique, qui peut être logée dans une rainure longitudinale externe (9, 9') du profilé porteur (1) au moyen d'un profil de serrage (43), et qui dépasse latéralement de la face supérieure (12) du profilé porteur (1).

14. Jeu d'éléments de construction suivant l'une quelconque des revendications 1 à 13, caractérisé par un couvre-joint (44) plat en matière plastique, qui peut être logé dans une rainure longitudinale externe (9, 9'; 10, 10') du profilé porteur (1) au moyen de crampons élastiques (45).

15. Jeu d'éléments de construction suivant l'une quelconque des revendications 1 à 14, caractérisé par un élément d'assemblage longitudinal (46) doté d'une section transversale en U, adaptée à l'espace interne (18) du profilé porteur (1), et dont les branches longitudinales (47, 47') présentent des trous (48, 48'), correspondant aux rainures longitudinales internes (11, 11') de deux profilés porteurs (1) à assembler, pour recevoir des boulons (3).

16. Jeu d'éléments de construction suivant l'une quelconque des revendications 1 à 15, caractérisé par un élément d'assemblage d'angle (49), composé de deux pièces profilées en U (50, 51) adaptées à l'espace interne (18) du profilé porteur (1) et disposées l'une par rapport à l'autre à angle droit, et dont les branches de fixation (52, 52'; 53, 53') présentent des trous (54) correspondant aux rainures longitudinales internes (11, 11') du profilé porteur (1), pour recevoir des boulons (3).
